# EUROPÄISCHE PATENTSCHRIFT

(11) **EP 3 513 099 B1**
(45) Veröffentlichungstag und Bekanntmachung des Hinweises auf die Patenterteilung: **02.12.2020**
(21) Anmeldenummer: 17832955.3
(22) Anmeldetag: 21.12.2017
(51) Int. Cl.: F16H 57/031, F16H 57/033

(54) **GETRIEBESEITIGES MOTORLAGERSCHILD**
GEARBOX-SIDE MOTOR END SHIELD
FLASQUE DE MOTEUR SITUÉ DU CÔTÉ DE LA TRANSMISSION

(30) Priorität: 22.12.2016 DE 102016226046
(43) Veröffentlichungstag der Anmeldung: 24.07.2019
(73) Patentinhaber: Siemens Aktiengesellschaft, 80333 München (DE)
(72) Erfinder: BOEING, Georg, 72108 Rottenburg (DE); BIHR, Jens, 73111 Lauterstein-Nenningen (DE)
(86) Internationale Anmeldenummer: PCT/EP2017/084019
(87) Internationale Veröffentlichungsnummer: WO 2018/115241

(56) Entgegenhaltungen:
- WO-A1-99/06743
- WO-A2-2004/077644
- DE-A1- 10 312 941

## Beschreibung

Prinzipiell umfasst der Begriff Winkelgetriebe alle Getriebe, die eine Umlenkung des Drehmoments um einen Winkel, insbesondere von 90 Grad, bewirken, wie Kegelrad- und Schneckengetriebe. Dabei unterscheidet man Winkelgetriebe ohne Achsversatz und Winkelgetriebe mit Achsversatz: Bei Winkelgetrieben ohne Achsversatz schneiden sich die Achsen der winklig zueinander stehenden An- und Abtriebswellen in einem Schnittpunkt. Bei Winkelgetrieben mit Achsversatz haben die Achsen der winklig zueinander stehenden An- und Abtriebswellen keinen gemeinsamen Schnittpunkt, sondern sie kreuzen sich lediglich. Dabei sind Kegelradgetriebe mit Achsversatz auch als Hypoidgetriebe bekannt.

Bei Winkelgetrieben mit Achsversatz, z.B. Schnecken- und Hypoidgetrieben, muss das Spiel zwischen einem auf einer antreibenden Welle angeordneten Ritzel und einem auf einer abtreibenden Welle angeordneten Zahnrad, z. B. einem Tellerrad, genau eingestellt werden; die Toleranzen liegen dabei im Bereich von Zehntel Millimetern. Beim Schneckengetriebe spricht man dabei von einer Tragbildeinstellung, beim Kegelradgetriebe von einer Spieleinstellung. Bei Winkelgetrieben mit Achsversatz ist der Achsversatz zwischen dem Motor-Ritzel und dem Zahnrad, der auch als Achsabstand bezeichnet wird, entscheidend für den Wirkungsgrad und den möglichen Übersetzungsbereich:
- Mit zunehmendem Achsabstand (Extremfall Schneckengetriebe) sinkt der Wirkungsgrad η (hoher Gleitanteil neben Wälzen), der realisierbare Übersetzungsbereich [i_min; i_max] wächst aber (i_max bis 100!).
- Mit abnehmendem Achsversatz (Extremfall Kegelradgetriebe mit Achsversatz = 0) wächst der Wirkungsgrad η (abnehmender Gleitanteil neben Wälzen), der realisierbare Übersetzungsbereich [i_min; i_max] sinkt aber (beim Kegelradgetriebe i_min ca. 1,5 und i_max ca. 6).

Schneckengetriebe sind die übliche Lösung für ein Winkelgetriebe, können aber den Nachteil aufweisen, dass aufgrund eines hohen Gleitanteils ihr Wirkungsgrad relativ klein ist. Kegelradgetriebe ohne Achsversatz weisen den Nachteil auf, dass der realisierbare Übersetzungsbereich begrenzt ist. Zwar könnte man auch mit dem Getriebetyp "Kegelradgetriebe ohne Achsversatz" jede gewünschte Übersetzung erreichen, nämlich indem man mehrere Getriebestufen einsetzt, diese Konstruktion wäre aber signifikant teurer als ein einstufiges Hypoidgetriebe.

Bei Hypoidgetrieben ist wie bei den Kegelradgetrieben ohne Achsversatz eine genaue Einstellung des Spiels zwischen dem Zahnrad und dem Ritzel entscheidend für den Wirkungsgrad, die Tragfähigkeit, die Geräuschentwicklung und die Lebensdauer des Getriebes. Die erforderliche Genauigkeit der jeweiligen Position von Ritzel und Zahnrad liegt bei < ± 1/10 mm.

Winkelgetriebemotoren mit Achsversatz werden unter anderem in der Fördertechnik eingesetzt, z.B. zum Antrieb einer Rollenbahn zum Transport von Stückgütern wie Paketen, Koffern, Paletten oder Kisten.

DE 10 2009 005 344 A1 (SEW-Eurodrive) 05.08.2010 beschreibt einen Winkelgetriebemotor mit einer sog. Helikon-Verzahnung des Ritzels 1. Dabei erfolgt eine Einstellung der Position des Zahnrads 6 in axialer Richtung durch ein Einlegen von Pass-Scheiben 518, 521 zwischen das Wälzlager 11, 25 und den Sicherungsring 12, 88 des Wälzlagers; dadurch kann die axiale Lage des Zahnrads im Bereich von < ± 1/10 mm genau eingestellt werden. Eine nachträgliche Einstellung der Position des Motorritzels in axialer Richtung ist nicht nötig, da die zylindrische Form des Ritzels (Helikon) und das plane Tellerrad eine Toleranz von ± 5/10 mm erlauben.

Aus WO 2004/077644 A2 ist ein Bausatz für eine Baureihe von Getriebemotoren bekannt, die auch einen Winkelgetriebemotor umfasst. Der Winkelgetriebemotor ein Winkelgetriebe in einem entsprechenden Gehäuse auf, das mit einem Elektromotor antreibbar ist. Der Bausatz umfasst auch Motorlagerschilder, die mit dem Winkelgetriebe und dem Elektromotor verbindbar sind. Die einzelnen Motorlagerschilder sind dazu ausgebildet, jeweils einen unterschiedlichen Achsversatz zwischen einer Welle im Winkelgetriebe und einer Achse des Elektromotors herzustellen.

Aufgabe der vorliegenden Erfindung ist es, einen verbesserten Winkelgetriebemotor anzugeben.

Diese Aufgabe wird erfindungsgemäß durch eine Baureihe von getriebeseitigen Motorlagerschildern für einen Winkelgetriebemotor gelöst, die die Merkmale des Anspruchs 1 umfasst.

Die Montageposition des getriebeseitigen Motorlagerschilds ist zwischen dem Getriebegehäuse und dem Statorgehäuse des Elektromotors. Die Positionsangabe "getriebeseitig" bezieht sich dabei auf den Elektromotor. Dabei weist das getriebeseitige Motorlagerschild sowohl eine Schnittstelle zum Getriebegehäuse als auch eine Schnittstelle zum Statorgehäuse auf. Das getriebeseitige Motorlagerschild eines Winkelgetriebemotors kann also durch ein anderes getriebeseitige Motorlagerschild ersetzt werden.

Eine Drehung des Motorlagerschildes um 180 Grad um die Achse der Motorwelle entspricht einer Drehung um 180 Grad um die Ebene des Motorlagerschildes.

Es sind Winkelgetriebemotoren bekannt, welche ein einteiliges Gehäuse, umfassend einen würfelförmigen Gehäuseabschnitt, d.h. das eigentliche Getriebegehäuse, und einen zylindrischen Gehäuseabschnitt, d.h. das Motorschild, aufweisen. Da der zylindrische Gehäuseabschnitt die Position eines Elektromotors definiert, wird durch die Einteiligkeit die Position des zylindrischen Gehäuseabschnitts relativ zum würfelförmigen Gehäuseabschnitt und somit die radiale Lage eines auf einer im Elektromotor drehbar gelagerten Motorwelle angeordneten Ritzels in Bezug auf ein im würfelförmigen Gehäuseabschnitt drehbar gelagertes Zahnrad vorgegeben. Eine Änderung des Spiels zwischen dem Ritzel und einem im würfelförmigen Gehäuseabschnitt drehbar gelagerten Zahnrad kann somit nur dadurch erreicht werden, dass das Zahnrad axial verstellt wird, z.B. durch ein Einlegen von Passscheiben, was ein großer Aufwand ist. Außerdem können das Getriebe und der Motor nicht in zwei parallelen Montagelinien separat montiert und dann aneinander geflanscht werden, sondern der Motor muss um die aus dem Getriebe ragende Motorwelle aufgebaut werden, d.h. es existiert eine Begrenzung auf eine serielle Montagelinie.

Es sind außerdem Winkelgetriebemotoren bekannt, welche ein zweiteiliges Gehäuse, umfassend ein das eigentliche Getriebegehäuse bildenden würfelförmigen Gehäuseteil und ein einen getriebeseitigen Motorschild aufweisenden zylindrischen Gehäuseteil, aufweisen; beispielsweise beschreibt DE102012010789A1 (SEW-Eurodrive) 05.12.2013 ein solches Winkelgetriebe mit zwei Gehäuseteilen. Allerdings bieten diese bekannten zweiteiligen Winkelgetriebe keine unterschiedlichen Achsversätze.

Die Erfindung schlägt ein zweistückiges Gehäuse vor: das eigentliche Getriebegehäuse und das Motorschild sind durch eine Schnittstelle getrennt. Zur Variation der Achsabstände werden lediglich unterschiedliche Motorlageschilder eingesetzt, jeweils verbunden mit denselben Typen von Getriebe- und Statorgehäusen. Da der motorseitige Abschnitt und der getriebeseitige Abschnitt der getriebeseitigen Motorlagerschilder der Baureihe jeweils in unterschiedlichen Positionen, d.h. mit einem unterschiedlichen Versatz, zueinander angeordnet sind, erzeugt die Verwendung zweier unterschiedlicher getriebeseitiger Motorlagerschilder der Baureihe Winkelgetriebemotoren mit unterschiedlichen Achsversätzen zwischen der Getriebewellenachse und der Achse der Motorwelle. Da unterschiedliche Winkelgetriebemotoren mit jeweils denselben Typen von Getriebe- und Statorgehäusen erzeugt werden können, wobei nur unterschiedliche getriebeseitige Motorlagerschilder zum Einsatz kommen, bietet die Erfindung den Vorteil einer geringeren Lagerhaltung.

Vorteilhafte Ausgestaltungen und Weiterbildungen der Erfindung sind in den abhängigen Ansprüchen angegeben.

Gemäß der Erfindung umfasst die Baureihe zumindest ein getriebeseitiges Motorlagerschild, welches in einer ersten Montageposition einen ersten Achsversatz erzeugt und in einer zweiten Montageposition, welche aus der ersten Montageposition durch eine Drehung des Motorlagerschildes um 180 Grad um die Achse der Motorwelle hervorgeht, einen zweiten, vom ersten Achsversatz abweichenden Achsversatz erzeugt. Es kann sich dabei um eine Baureihe mit nur einem einzigen Motorlagerschild handeln, womit aber trotzdem zwei verschiedene Achsversätze zwischen der Getriebewellenachse und der Achse der Motorwelle realisierbar sind. Die Baureihe kann aber auch mehrere getriebeseitiges Motorlagerschilder umfassen, die aufgrund ihrer besonderen konstruktiven Gestaltung jeweils die beiden um 180 Grad verschiedenen Montagepositionen einnehmen können. Das getriebeseitiges Motorlagerschild weist symmetrisch angeordnete Befestigungsmittel auf, z.B. durchgehende Bohrlöcher in einer Stirnplatte, mit denen es in beiden, gegeneinander um 180 Grad gedrehten Montagepositionen an dem Getriebegehäuse befestigt werden kann. Da der motorseitige Abschnitt und der getriebeseitige Abschnitt nicht konzentrisch zueinander angeordnet sind, können durch eine 180 Grad-Drehung um das Zentrum des getriebeseitigen Abschnitts zwei unterschiedliche Positionen des motorseitigen Abschnitts erzeugt werden. Umgekehrt können in analoger Weise durch eine 180 Grad-Drehung um das Zentrum des motorseitigen Abschnitts zwei unterschiedliche Positionen des getriebeseitigen Abschnitts erzeugt werden.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: eine Schrägansicht eines Hypoid-Getriebemotors;
- Fig. 2: die Komponenten eines Hypoid-Getriebemotors;
- Fig. 3: eine Schrägansicht eines Motorlagerschilds;
- Fig. 4: eine Schrägansicht eines Elektromotors mit einem Motorlagerschild gemäß Fig. 3;
- Fig. 5: eine teiltransparente Sicht auf den Getriebemotor entlang der Motorwelle;
- Fig. 6: eine Schrägansicht eines mit einem Tellerrad kämmenden Ritzels;
- Fig. 7 bis 9: eine Baureihe mit drei verschiedenen Motorlagerschildern;
- Fig. 10: einen Hypoid-Getriebemotor als Antrieb einer Arbeitsmaschine;
- Fig. 11: eine Seitenansicht eines Hypoid-Getriebemotors mit einem ersten, größeren Achsversatz;
- Fig. 12: eine Draufsicht der Getriebemontageplatte gemäß Fig. 11;
- Fig. 13: eine Seitenansicht eines Hypoid-Getriebemotors mit einem zweiten, kleineren Achsversatz; und
- Fig. 14: eine Draufsicht der Getriebemontageplatte gemäß Fig. 13.

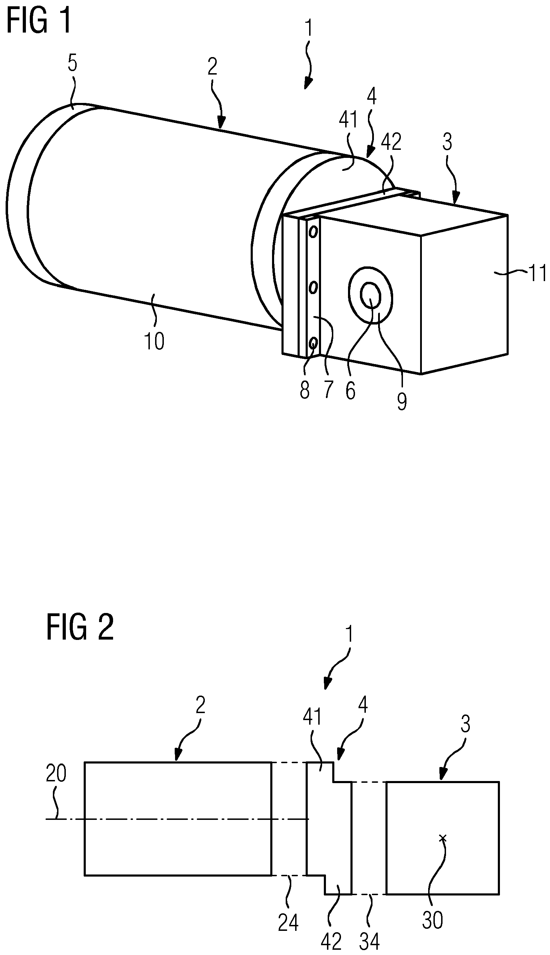

Fig. 1 zeigt eine Schrägansicht eines Hypoid-Getriebemotors 1, welcher einen Elektromotor 2 und ein Hypoidgetriebe 3 aufweist.

Der Elektromotor 2 weist ein zylinderförmiges Statorgehäuse 10 und zwei Motorlagerschilder, die an den beiden Stirnseiten des Statorgehäuses 10, die auch als A-Seite (Abtriebsseite) und B-Seite (Lüfterseite) bezeichnet werden, montiert sind. Dabei befindet sich das A-seitige Motorlagerschild 4 an der Abtriebsseite des Elektromotors 2, d.h. an der dem Getriebe 3 zugewandten Seite, und das B-seitige Motorlagerschild 5 an der Lüfterseite des Elektromotors 2, d.h. an der vom Getriebe 3 abgewandten Seite. Daher wird das A-seitige Motorlagerschild 4 auch als getriebeseitiges Motorlagerschild bezeichnet.

Das einstückig ausgebildete A-seitige Motorlagerschild 4 weist einen motorseitigen Abschnitt 41 sowie einen getriebeseitiger Abschnitt 42 auf. Der motorseitige Abschnitt 41, der als Abdeckung der getriebeseitigen Stirnseite des Statorgehäuses 10 dient, hat einen kreisrunden Umfang, entsprechend der Zylinderform des Statorgehäuses 10. Der getriebeseitige Abschnitt 42, der als Getriebemontageplatte oder Getriebeflansch dient, hat einen eckigen Umfang, entsprechend einer Quaderform des Getriebegehäuses 11.

Das Hypoidgetriebe 3 weist ein quaderförmiges Getriebegehäuse 11 auf, in dem eine ein Zahnrad tragende Abtriebswelle 6 gelagert ist, die gegenüber dem Getriebegehäuse 11 mithilfe eines Wellendichtrings 9 abgedichtet ist. Das Getriebegehäuse 11 weist an zwei gegenüberliegenden Seiten jeweils einen Flansch 7 mit Durchgangslöchern auf. Die beiden Flansche 7 liegen an dem getriebeseitige Abschnitt 42 des A-seitigen Motorlagerschilds 4 an und sind dort mithilfe von Verbindungsbolzen 8 befestigt. Dabei ist das Getriebegehäuse 11 auf der zum Elektromotor 2 gewandten Seite offen, um das Einführen einer Motorwelle des Elektromotors 2 in das Getriebegehäuse 11 zu ermöglichen, so dass ein auf die Motorwelle aufgestecktes Ritzel mit einem in dem Getriebegehäuse 11 drehbar gelagerten Zahnrad kämmt.

Fig. 2 zeigt Komponenten eines Hypoid-Getriebemotors 1, nämlich einen Elektromotor 2 mit einer in der Zeichenebene verlaufenden Rotorwellenachse 20, ein Hypoidgetriebe 3 mit einer senkrecht zur Zeichenebene verlaufenden Abtriebswellenachse 30, sowie ein zwischen dem Elektromotor 2 und dem Hypoidgetriebe 3 angeordnetes A-seitiges Motorlagerschild 4, welches einen motorseitigen Abschnitt 41 sowie einen getriebeseitiger Abschnitt 42 aufweist.

Die relative Montageposition des Elektromotors 2 und des A-seitigen Motorlagerschildes 4 ist durch die Strichlinien 24, die relative Montageposition des Hypoidgetriebes 3 und des A-seitigen Motorlagerschildes 4 durch die Strichlinien 34 angedeutet.

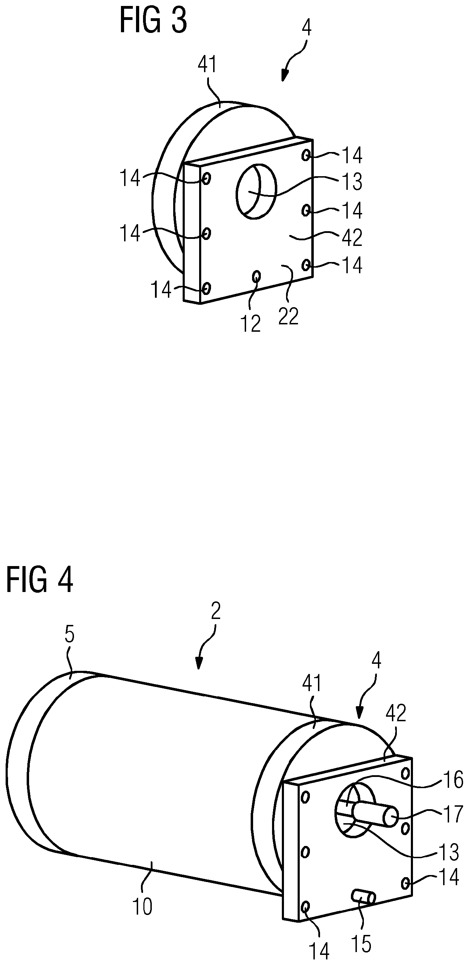

Fig. 3 ist eine Schrägansicht des A-seitigen Motorlagerschildes 4 von Fig. 1. Der motorseitige Abschnitt 41 weist nicht dargestellte Befestigungsvorrichtungen zur Befestigung an dem Statorgehäuse 10 auf, z.B. Durchgangslöcher zum Durchführen von Schraubbolzen, mittels derer das A-seitige Motorlagerschild 4 am Statorgehäuse 10 befestigt werden kann. Der getriebeseitige Abschnitt 42 weist entlang seinen beiden vertikal verlaufenden Seiten durchgehende Bohrlöcher 14 zum Einstecken von Verbindungsbolzen 8 auf, die in der getriebeseitigen Stirnseite 22 münden. Mithilfe der durchgehende Bohrlöcher 14 kann das A-seitige Motorlagerschild 4 mit dem Getriebegehäuse 11 verschraubt werden.

Das A-seitige Motorlagerschild 4 weist eine Durchgangsöffnung 13 auf, zum Durchstecken einer Motorwelle des Elektromotors 2.

Der getriebeseitige Abschnitt 42 weist am unteren Rand seiner getriebeseitigen Stirnseite 22, in der Mitte der bodenseitigen horizontalen Kante, ein Stiftloch 12 auf, d.h. ein Durchgangs- oder Sackloch zum Einsetzen eines Stifts. Die Funktion des Stiftlochs 12 wird in Fig. 4 näher erläutert.

Fig. 4 zeigt eine Schrägansicht eines Elektromotors 2 mit einem A-seitigen Motorlagerschild 4 gemäß Fig. 3. Eine Motorwelle 16, an deren Ende ein Ritzel 17 befestigt ist, ragt durch die Durchgangsöffnung 13 des A-seitigen Motorlagerschildes 4. In das Stiftloch 12 am unteren Rand der getriebeseitigen Stirnseite 22 des getriebeseitigen Abschnitt 42 des A-seitigen Motorlagerschildes 4 ist ein Stift 15 eingesetzt. Er dient als Drehpunkt für das Getriebegehäuse 11 relativ zum A-seitigen Motorlagerschild 4. Dazu wird der Stift 15 in ein Stiftloch an der dem Elektromotor 2 zugewandten, offenen Stirnseite des Getriebegehäuses 11 gesteckt.

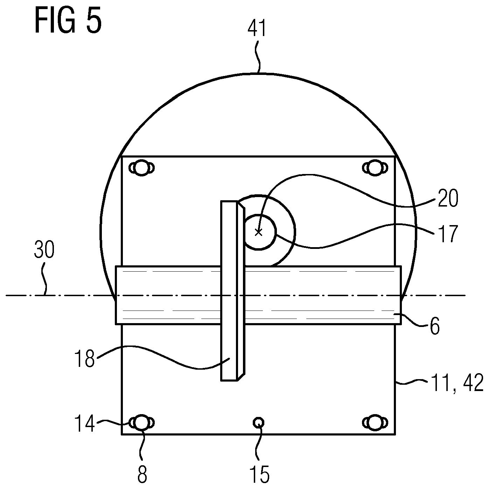

Fig. 5 zeigt eine schematische Ansicht, entlang der Achse 20 der Motorwelle, auf das in Blickrichtung hinter dem Getriebegehäuse 11 angeordnete A-seitige Motorlagerschild 4, aufweisend den motorseitigen Abschnitt 41 und den in Deckung mit dem Getriebegehäuse 11 liegenden getriebeseitigen Abschnitt 42. Dabei kann das Getriebegehäuse 11 um den Stift 15, der sowohl in einem Stiftloch in dem getriebeseitigen Abschnitt 42 des A-seitigen Motorlagerschilds 4 als auch in einem Stiftloch des Getriebegehäuses 11 eingeführt ist, als Drehpunkt gegenüber dem getriebeseitigen Abschnitt 42 des A-seitigen Motorlagerschilds 4 verdreht werden. Die relative Verdrehung wird so eingestellt, dass das Ritzel 17 mit einem definierten Spiel mit dem um die Wellenachse 30 drehbar gelagerten Zahnrad 18 des Hypoidgetriebes, einem Tellerrad, kämmt. In der definierten Relativposition werden die Verbindungsbolzen 8, welche durch eine Verdrehung gestattende, als Langlöcher ausgebildete durchgehende Bohrlöcher 14 des Getriebegehäuses 11 geführt sind, fest angezogen und somit die gewünschte Position zwischen dem Getriebegehäuse 11 und dem A-seitige Motorlagerschild 4 gesichert.

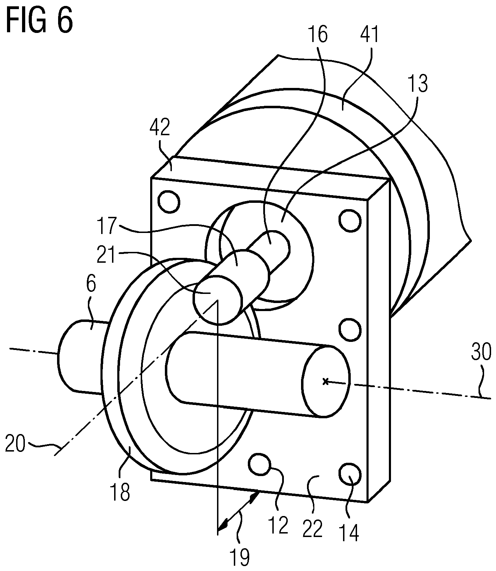

Fig. 6 zeigt eine Schrägansicht eines mit einem Tellerrad 18 kämmenden Ritzels 17. Die durch eine Durchgangsöffnung 13 im A-seitigen Motorlagerschild 41, 42 ragende Motorwelle 16 trägt an ihrer Spitze ein Ritzel 17, welches mit einem senkrecht zur Motorwelle 16 um die Abtriebswelle 6 drehbar gelagerten Tellerrad 18 kämmt. Für eine definierte axiale Positionierung des Ritzels 17 auf der Motorwelle 16 wird die Stirnseite 22 des getriebeseitigen Abschnitts 42 des A-seitigen Motorlagerschildes 41, 42 als Bezugsebene gewählt. Dabei wird das Ritzel 17 soweit in die Motorwelle 16 eingepresst, bis ein definierter Abstand 19 zwischen dem Ritzel 17, z.B. der Stirnfläche 21 des Ritzels 17, und dem A-seitigen Motorlagerschild 41, 42, z.B. der Stirnseite 22 des getriebeseitigen Abschnitts 42 des A-seitigen Motorlagerschildes 41, 42, erreicht ist.

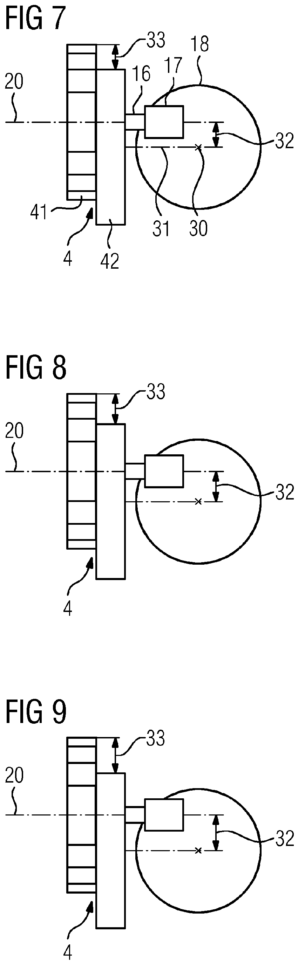

Fig. 7 bis 9 zeigen drei verschiedene A-seitige Motorlagerschilder 4, die eine Baureihe bilden. Die A-seitige Motorlagerschilder 4 unterscheiden sich darin, dass der Höhenversatz 33 zwischen dem motorseitigen Abschnitt 41 und dem getriebeseitigen Abschnitt 42 von Fig. 7 bis Fig. 9 zunimmt. Einerseits bleiben die Lagerung der Motorwelle 16 und somit die Positionen der Motorwellenachse 20 und des Ritzels 17 in Bezug auf den motorseitigen Abschnitt 41 unverändert. Andererseits bleiben die Positionen der Abtriebswellenachse 30 und des Zahnrads 18 in Bezug auf den getriebeseitigen Abschnitt 42 unverändert. Folglich führt die oben erwähnte Variation des Höhenversatzes 33 zwischen dem motorseitigen Abschnitt 41 und dem getriebeseitigen Abschnitt 42 zu einer entsprechenden Variation der Lage des Ritzels 17 in Bezug auf das Zahnrad 18, d.h. zu einer entsprechenden Variation des Achsversatzes 32.

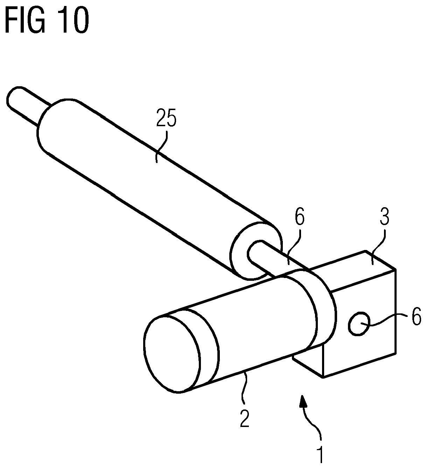

Fig. 10 zeigt einen Winkelgetriebemotor 1, aufweisend einen Elektromotor 2 und ein damit verbundenes Winkelgetriebe 3. Die schnelle Rotation einer Motorwelle des Elektromotors 2 wird durch das Winkelgetriebe 3 in eine langsamere und um 90 Grad gedrehte Rotation einer Abtriebswelle 6 des Winkelgetriebes 3 übersetzt. Die Abtriebswelle 6 des Winkelgetriebes 3 ist drehfest mit einer Antriebsrolle 25 einer Rollenbahn verbunden, zum Transport von Stückgütern wie Paketen, Koffern, Paletten oder Kisten.

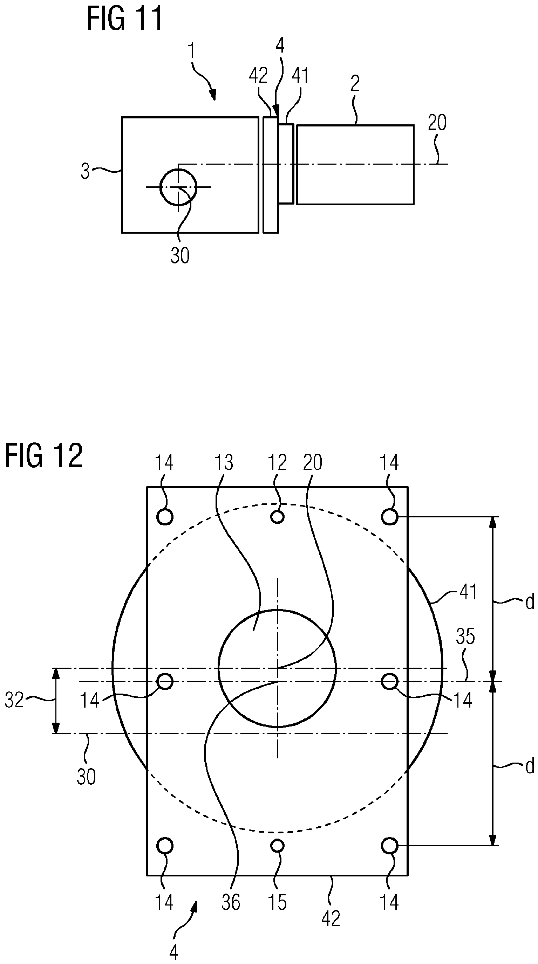

Fig. 11 zeigt eine Seitenansicht eines Hypoid-Getriebemotors 1, umfassend einen Elektromotor 2 und ein mit dem Elektromotor 2 verbundenes Winkelgetriebe 3, mit einem ersten, größeren Achsversatz zwischen einer Wellenachse 2 des Elektromotors 2 und einer Wellenachse 30 des Winkelgetriebes 3. Dabei ist das getriebeseitige Motorlagerschild 4 des Elektromotors 2, umfassend einen kreisrunden motorseitigen Abschnitt 41 und einen rechteckigen getriebeseitigen Abschnitt 42, welcher gemäß seiner Funktion auch als Getriebemontageplatte bezeichnet wird, in einer ersten Montageorientierung angeordnet.

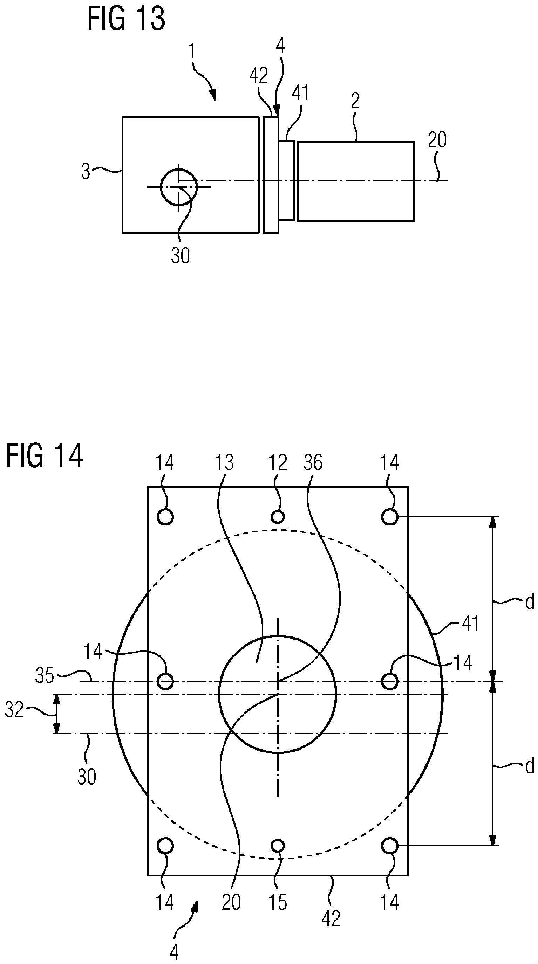

Fig. 13 zeigt eine Seitenansicht eines zweiten Hypoid-Getriebemotors 1, der sich nur insofern von dem Hypoid-Getriebemotor 1 aus Fig. 11 unterscheidet, als das getriebeseitige Motorlagerschild 4 in einer zweiten Montageorientierung angeordnet ist. Dabei ergibt sich die zweite Montageorientierung aus der ersten Montageorientierung durch eine Drehung des getriebeseitige Motorlagerschild 4 in der Lagerschildebene um 180 Grad.

Fig. 12, welche eine Draufsicht der Getriebemontageplatte 4 gemäß Fig. 11 zeigt, stellt die erste Montageorientierung des getriebeseitige Motorlagerschilds 4 dar. Von der Getriebemontageplatte 4 teilweise verdeckt ist in der Draufsicht auch der kreisrunde motorseitige Abschnitt 41 des getriebeseitigen Motorlagerschilds 4 zu erkennen.

Die Getriebemontageplatte 42 des getriebeseitigen Motorlagerschilds 4 weist entlang ihres Umfanges sechs durchgehende Bohrlöcher 14 auf, wobei das Lochbild der durchgehende Bohrlöcher 14 symmetrisch bezüglich einer Symmetrielinie 35 ist. Jeweils drei Bohrlöcher 14 sind voneinander im Abstand d äquidistant entlang einer Längsseite angeordnet. An den Schmalseiten der Getriebemontageplatte 42 ist jeweils ein Stiftloch 12 mittig zwischen zwei Bohrlöchern 14 angeordnet. Dabei ist in das untere Stiftloch 12 ein Stift 15 eingesetzt.

Die Durchgangsöffnung 13 des getriebeseitigen Motorlagerschilds 4, deren Mittelpunkt auf der Wellenachse 20 des Elektromotors 2 liegt, ist um einen ersten, größeren Achsabstand 32 gegen die Wellenachse 30 des Getriebes 3 versetzt. Dabei verläuft die Symmetrielinie 35 des Lochbilds zwischen der Wellenachse 20 des Elektromotors 2 und der Wellenachse 30 des Getriebes 3.

Fig. 14, welche eine Draufsicht der Getriebemontageplatte 4 gemäß Fig. 13 zeigt, stellt die zweite Montageorientierung des getriebeseitige Motorlagerschilds 4 dar, welche sich aus der in Fig. 12 gezeigten ersten Montageorientierung durch eine Drehung des getriebeseitige Motorlagerschild 4 in der Lagerschildebene bzw. um die Wellenachse 20 des Motors 2 um 180 Grad ergibt.

Von der in Fig. 12 dargestellten ersten Montageorientierung unterscheidet sich die in Fig. 14 dargestellte zweite Montageorientierung darin, dass die Durchgangsöffnung 13 des getriebeseitigen Motorlagerschilds 4, deren Mittelpunkt auf der Wellenachse 20 des Elektromotors 2 liegt, um einen zweiten, kleineren Achsabstand 32 gegen die Wellenachse 30 des Getriebes 3 versetzt ist und die Wellenachse 20 des Elektromotors 2 zwischen der Symmetrielinie 35 des Lochbilds und der Wellenachse 30 des Getriebes 3 verläuft.

## Patentansprüche

1. Baureihe von getriebeseitigen Motorlagerschildern (4) für einen Winkelgetriebemotor (1), welcher ein Getriebegehäuse (11) eines Winkelgetriebes (3), in dem ein Zahnrad (18) um eine Getriebewellenachse (30) drehbar gelagert ist, und ein Statorgehäuse (10) eines Elektromotors (2), in dem eine Motorwelle (16) mit einem darauf befestigten Ritzel (17) drehbar gelagert ist, aufweist,
wobei die getriebeseitigen Motorlagerschilder (4) jeweils einen getriebeseitigen Abschnitt (42), an dem das Getriebegehäuse (11) fixierbar ist, und einen mit dem getriebeseitigen Abschnitt (42) fest verbundenen motorseitigen Abschnitt (41), an dem das Statorgehäuse (10) fixierbar ist, aufweisen, wobei die getriebeseitigen Motorlagerschilder (4) jeweils einen unterschiedlichen Achsversatz (32) zwischen der Getriebewellenachse (30) und der Achse (20) der Motorwelle (16) erzeugen, **dadurch gekennzeichnet, dass** die Baureihe zumindest ein getriebeseitiges Motorlagerschild (4) umfasst, welches in einer ersten Montageposition einen ersten Achsversatz (32) erzeugt und in einer zweiten Montageposition, welche aus der ersten Montageposition durch eine Drehung des Motorlagerschildes (4) um 180 Grad um die Achse (20) der Motorwelle (16) hervorgeht, einen zweiten, vom ersten Achsversatz abweichenden Achsversatz (32) erzeugt.

2. Getriebeseitiges Motorlagerschild (4) für einen Winkelgetriebemotor (1), welcher ein Getriebegehäuse (11) eines Winkelgetriebes (3), in dem ein Zahnrad (18) um eine Getriebewellenachse (30) drehbar gelagert ist, und ein Statorgehäuse (10) eines Elektromotors (2), in dem eine Motorwelle (16) mit einem darauf befestigten Ritzel (17) drehbar gelagert ist, aufweist,
wobei das Motorlagerschild (4) einen getriebeseitigen Abschnitt (42), an dem das Getriebegehäuse (11) fixierbar ist, und einen mit dem getriebeseitigen Abschnitt (42) fest verbundenen motorseitigen Abschnitt (41), an dem das Statorgehäuse (10) fixierbar ist, aufweist, und
wobei das Motorlagerschild (4) in einer ersten Montageposition zwischen dem Getriebegehäuse (11) und dem Statorgehäuse (10) einen ersten Achsversatz (32) zwischen der Getriebewellenachse (30) und der Achse (20) der Motorwelle (16) erzeugt und in einer zweiten Montageposition zwischen dem Getriebegehäuse (11) und dem Statorgehäuse (10), welche aus der ersten Montageposition durch eine Drehung des Motorlagerschildes um 180 Grad um die Achse (20) der Motorwelle (16) hervorgeht, einen zweiten, vom ersten Achsversatz (32) abweichenden Achsversatz (32) erzeugt.

## Claims

1. Type series of gear-side motor end shields (4) for an angle geared motor (1), which has a gear housing (11) of an angle gear (3), in which a toothed wheel (18) is mounted to rotate about a gear shaft axle (30), and a stator housing (10) of an electric motor (2), in which a motor shaft (16) having a pinion (17) fastened thereto is rotatably mounted,
wherein the gear-side motor end shields (4) each have a gear-side section (42), to which the gear housing (11) can be fixed, and a motor-side section (41), permanently connected to the gear-side section (42), to which the stator housing (10) can be fixed, wherein the gear-side motor end shields (4) each produce a different axial offset (32) between the gear shaft axle (30) and the axle (20) of the motor shaft (16), **characterised in that**
the type series comprises at least one gear-side motor end shield (14), which in a first assembly position produces a first axial offset (32) and in a second assembly position, which emanates from the first assembly position due to a rotation of the motor end shield (4) about 180 degrees around the axle (20) of the motor shaft (16), produces a second axial offset (32) different from the first axial offset.

2. Gear-side motor end shield (4) for an angle geared motor (1), which has a gear housing (11) of an angle gear (3), in which a toothed wheel (18) is mounted to rotate about a gear shaft axle (30), and a stator housing (10) of an electric motor (2), in which a motor shaft (16) having a pinion (17) fastened thereto is rotatably mounted,
wherein the motor end shield (4) has a gear-side section (42), to which the gear housing (11) can be fixed, and a motor-side section (41), permanently connected to the gear-side section (42), to which the stator housing (10) can be fixed, and
wherein the motor end shield (4), in a first assembly position between the gear housing (11) and the stator housing (10), produces a first axial offset (32) between the gear shaft axle (30) and the axle (20) of the motor shaft (16) and in a second assembly position between the gear housing (11) and the stator housing (10), which emanates from the first assembly position by a rotation of the motor end shield about 180 degrees around the axle (20) of the motor shaft (16), produces a second axial offset (32) different from the first axial offset (32).

## Revendications

1. Gamme de flasques (4) de moteur, du côté de la transmission, d'un moteur (1) à transmission angulaire, qui a un carter (11) d'une transmission (3) angulaire, dans lequelle une roue (18) dentée est montée tournante autour d'un axe (30) d'un arbre de transmission, et une carcasse (10) de stator d'un moteur (2) électrique, dans laquelle un arbre (16) de moteur, ayant un pignon (17), qui y est fixé, est monté tournant,
dans laquelle les flasques (4) de moteur du côté de la transmission ont chacun une partie (42) du côté de la transmission où le carter (11) de la transmission peut être immobilisé, et une partie (41) du côté du moteur reliée fixement à la partie (42) du côté de la transmission, partie (41) sur laquelle la carcasse (10) de stator peut être immobilisée,
dans lequel les flasques (4) de moteur du côté de la transmission produisent chacun un décalage (32) d'axe différent entre l'axe (30) de l'arbre de la transmission et l'axe (20) de l'arbre (16) du moteur,
**caractérisée en ce que**
la gamme comprend au moins un flasque (4) de moteur du côté de la transmission, qui, dans une première position de montage, produit un premier décalage (32) d'axe et, dans une deuxième position de montage, qui se déduit de la première position de montage par une rotation du flasque (4) de moteur de 180 degrés autour de l'axe (20) de l'arbre (16) du moteur, produit un deuxième décalage (32) d'axe différent du premier décalage d'axe.

2. Flasque (4) de moteur, du côté de la transmission, d'un moteur (1) à transmission angulaire, qui a un carter (11) d'une transmission (3) angulaire, dans lequel une roue (18) dentée est montée tournante autour d'un axe (30) d'un arbre de transmission, et une carcasse (10) de stator d'un moteur (2) électrique, dans laquelle un arbre (16) de moteur, ayant un pignon (17), qui y est fixé, est monté tournant,
dans lequel le flasque (4) de moteur a une partie (42) du côté de la transmission où le carter (11) de la transmission peut être immobilisé, et une partie (41) du côté du moteur reliée fixement à la partie (42) du côté de la transmission, partie (41), sur laquelle la carcasse (10) de stator peut être immobilisée, et
dans lequel le flasque (4) de moteur produit, dans une première position de montage, entre le carter (11) de la transmission et le carter (10) de stator, un premier décalage (32) d'axe entre l'axe (30) de l'arbre de la transmission et l'axe (20) de l'arbre (16) du moteur et produit, dans une deuxième position de montage, qui se déduit de la première position de montage par une rotation du flasque de moteur de 180 degrés autour de l'axe (20) de l'arbre (16) du moteur, entre le carter (11) de la transmission et la carcasse (10) de stator, un deuxième décalage (32) d'axe différent du premier décalage (32) d'axe.
